## Europäisches Patentamt

## European Patent Office

## Office européen des brevets

(19)

(11) Numéro de publication: **0 204 608**
**B1**

(12)

# FASCICULE DE BREVET EUROPEEN

(45) Date de publication du fascicule du brevet:
**10.01.90**

(51) Int. Cl.⁴: **H02G 7/20**

(21) Numéro de dépôt: **86401077.2**

(22) Date de dépôt: **22.05.86**

(54) **Support de câbles pour poteau électrique.**

(30) Priorité: **28.05.85 FR 8507954**

(43) Date de publication de la demande:
**10.12.86 Bulletin 86/50**

(45) Mention de la délivrance du brevet:
**10.01.90 Bulletin 90/2**

(84) Etats contractants désignés:
**AT BE DE FR GB IT LU NL SE**

(56) Documents cités:
**CH-A- 278 737**
**DE-A- 1 590 289**
**DE-A- 1 914 784**
**DE-A- 2 046 774**
**FR-A- 1 035 391**
**FR-A- 1 145 447**

(73) Titulaire: **MANUFACTURE D'APPAREILLAGE
ELECTRIQUE DE CAHORS, B.P.149 Regourd,
F-46003 Cahors Cédex(FR)**

(72) Inventeur: **Bourrieres, Pierre, 135 rue de la Barre,
F-46000 Cahors(FR)**

(74) Mandataire: **Bouju, André, Cabinet Bouju 38 avenue de
la Grande Armée, F-75017 Paris(FR)**

ACTORUM AG

## Description

La présente invention concerne un support de câbles pour poteau électrique, comportant un corps en matériau isolant comprenant une âme sur laquelle sont montés des supports de câble individuels, le support de câbles comprenant en outre des moyens pour rapporter ledit support à une extrémité d'un poteau, tandis que des moyens de fixation entre les supports de râble individuels et l'âme sont noyés dans une matière de bourrage.

Un tel support de câbles est connu d'après le FR-A 1 035 391. Des supports isolants de ce genre, rapportés à l'extrémité d'un poteau, ont l'avantage de supprimer la nécessité des isolateurs individuels et de permettre la fabrication de ces supports indépendamment du poteau.

Cependant, le corps en matériau isolant apparaît coûteux et difficile à réaliser car il nécessite une masse importante de matière plastique à hautes caractéristiques de résistance mécanique, résistance à la formation des arcs, résistance au vieillissement etc.

On connaît encore d'après le CH-A 278 737 un support ayant un corps tubulaire, de composition non précisée, destiné à recevoir des isolateurs individuels pour la fixation de câbles électriques. Il ne s'agit donc pas d'un support assurant par lui-même l'isolation entre câbles.

Par ailleurs, le DE-A 1 914 784 décrit un isolateur individuel comprenant une armature de forme allongée, en fibre de verre, fixée à ses deux extrémités à des plaques métalliques, et noyée dans une mousse plastique. En outre, l'isolateur comprend une couche externe constituée par un matériau résistant aux intempéries, matière plastique ou céramique, la surface extérieure de cette couche présentant des ondulations profondes. Cet isolateur individuel, ou en tout cas son armature en fibres de verre longitudinales, n'offre qu'une médiocre résistance à la compression, ce qui le rend a priori inapte à supporter les importantes contraintes de flexion - compression subies par un support pour câbles multiples destiné à être monté au sommet d'un poteau électrique.

Le but de la présente invention est de proposer un support de câbles plus économique que celui décrit dans le FR-A 1 035 391. Suivant l'invention, le support de câbles est caractérisé en ce que l'âme est délimitée extérieurement par une coque sensiblement rigide à laquelle sont fixés les supports de câble individuels, et en ce que l'âme est revêtue par une peau isolante avec interposition de la matière de bourrage.

Ainsi l'âme, et notamment la coque assurant une part importante de la résistance mécanique de l'ensemble sont protégées par la peau. Elles n'ont pas besoin d'une résistance particulière au vieillissement par contact avec le milieu extérieur, ni d'une résistance particulière à la formation des arcs. C'est la peau qui assure ces fonctions. La matière de bourrage non seulement protège et le cas échéant verrouille la fixation des supports individuels, mais en outre atténue les aspérités résultant de cette fixation sur la coque, et permet donc à la peau d'être partout en contact étroit avec la matière sous-jacente, sans décollement.

De préférence, la matière de bourrage a, en contact avec la peau, une surface ondulée définissant des ondulations correspondantes à la surface extérieure de la peau. Ainsi, la peau a une forme ondulée allongeant le chemin d'arc entre deux supports individuels.

La coque peut être tronconique. Ainsi, il est possible de monter le même support de câbles sur des poteaux de dimensions variées en sectionnant le corps central à un niveau où celui-ci présente une dimension transversale correspondant à la dimension du poteau sur lequel il doit être monté.

Les supports individuels peuvent comprendre une plaque de base collée contre la coque, tandis que des fibres peuvent être enroulées autour de la plaque de base et de la coque pour renforcer la liaison.

Selon un autre mode de réalisation, les supports de câble individuels comprennent chacun une tige s'étendant radialement à travers la coque dans un tube support isolant interposé entre un épaulement de support de câble individuel et un écrou ou analogue s'appuyant sur une collerette du tube elle-même appuyée contre la surface extérieure de la coque à l'opposé de l'épaulement, qui est adjacent à une tête du support individuel.

Selon un aspect avantageux de l'invention, les moyens pour supporter le corps à une extrémité d'un poteau comprennent une entretoise annulaire emmanchée avec la coque.

Ainsi, en utilisant des entretoises de dimensions variées, il est possible d'adapter aisément le support de câbles à des poteaux de différentes formes tout en ne fabriquant qu'un seul modèle de corps. Cette disposition permet en outre de réduire les stocks de supports de câbles nécessaires pour faire face aux nécessités de remplacement sur différents modèles de poteaux.

Selon un autre aspect avantageux de l'invention, les moyens pour rapporter le corps central permettent d'orienter le support de câbles sur l'extrémité du poteau, autour de l'axe du poteau. Ainsi, on peut facilement orienter le support de câbles après sa mise en place sur le poteau afin que les supports de câble individuels soient exactement en alignement avec les câbles à supporter.

D'autres caractéristiques et avantages de l'invention résulteront encore de la description ci-après d'exemples non limitatifs en référence aux dessins annexés, parmi lesquels :

La figure 1 est une vue en coupe longitudinale d'un premier mode de réalisation de l'invention

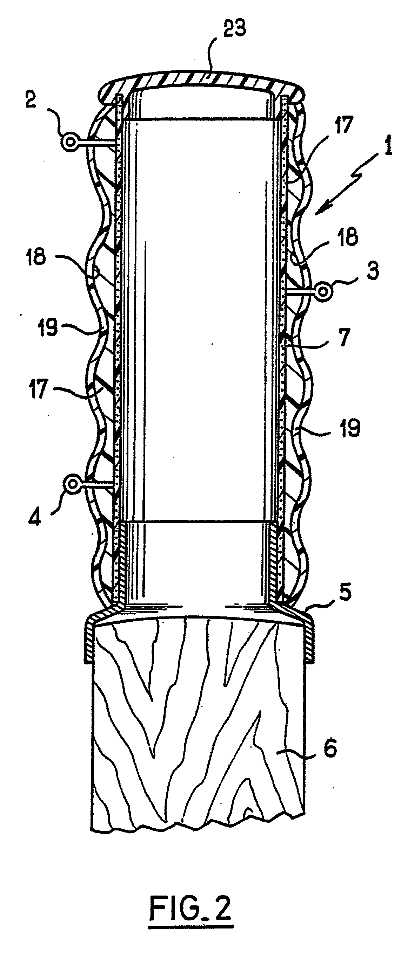

La figure 2 est une vue en coupe longitudinale d'un second mode de réalisation de l'invention.

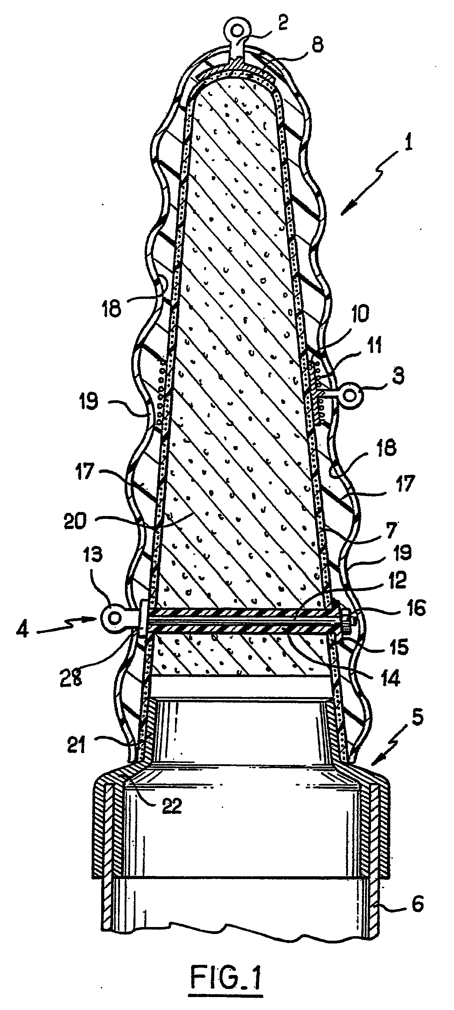

En référence à la figure 1, le support de câbles pour poteau électrique selon l'invention, comporte un corps central généralement désigné en (1), sur lequel sont montés des supports de câbles individuels (2, 3, 4), et des moyens formés par une entretoise (5) pour relier le corps central (1) à l'extrémité supérieure d'un poteau (6).

Selon ce premier mode de réalisation, le corps central (1) comporte une coque centrale creuse (7) fermée à sa partie supérieure, en matériau filamentaire noyé dans une résine. La structure centrale (7) est, par exemple, réalisée par enroulement filamentaire sur un mandrin, de préférence un mandrin tronconique à base circulaire. La technique de la réalisation d'un corps creux par enroulement filamentaire est en elle-même bien connue et il n'est donc pas nécessaire d'en donner une description détaillée. Les fibres du matériau filamentaire s'étendent selon une direction générale tangentielle formant un angle aigu (non droit) avec l'axe de la coque 7. De plus, la coque peut être renforcée par des fibres longitudinales, également noyées dans la résine. Ces fibres longitudinales font par exemple partie d'un tissu mis en place autour de la coque entre deux couches d'enroulement filamentaire.

Dans l'exemple de réalisation illustré par la figure 1, le support de câble individuel (2) est fixé à la partie supérieure de support de câbles, ce qui permet de diminuer les problèmes de torsion sur la coque centrale et, dans le cas d'un support de trois câbles comme illustré, de répartir les supports de câbles individuels de façon symétrique sur le corps central.

Le support de câble individuel (2) comporte à sa partie inférieure une plaque de base (8) collée à la structure centrale (7).

De même, le support de câble individuel (3) comporte une plaque de base (10) épousant sensiblement la forme de la surface latérale de la coque (7) et collée à celle-ci. Afin d'augmenter la résistance de la liaison entre la plaque (10) et la structure centrale (7), des fibres (11) sont de préférence enroulées autour de la coque (7) et de la plaque (10) après mise en place de celle-ci.

Le support de câble individuel (4) comporte une tige (12), solidaire de la tête de support (13), et s'étendant transversalement à la coque (7) dans un tube support isolant (14) comprenant une collerette (15) appuyée sur la surface extérieure de la coque (7). A son extrémité, opposée à la tête de support (13), la tige (12) est filetée et est maintenue en place par un écrou (16) qui s'appuie sur la collerette (15) et serre le tube (14) contre une collerette (28), formant épaulement, que présente la tige (12) à l'extérieur de la coque (7) de côté de la tête (13). La longueur du tube (14) est, de préférence, égale à la dimension transversale de la coque (7), de sorte que le serrage de l'écrou (16) permet de fixer fermement le support de câble individuel (4) sans exercer de contrainte d'écrasement sur la coque (7).

Bien que pour des commodités de description, divers modes de fixation des supports de câble individuels aient été décrits en liaison avec une même figure, on comprendra que les supports de câble individuels peuvent tous être fixés sur le corps central par le même type de moyens de fixation.

La coque (7) est recouverte d'une résine de bourrage (17) ayant une surface externe (18) formant des ondulations. La résine de bourrage crée ainsi un chemin d'arcs accru entre les supports de câble individuels. La résine de bourrage (17) est recouverte d'une peau (19), de préférence en résine au silicône, qui protège le corps central contre les arcs électriques, contre le vieillissement par les ultra-violets et contre la pénétration d'eau.

Afin d'augmenter la rigidité du corps central (1), celui-ci est de préférence rempli, au moins sur une partie de sa hauteur, avec un matériau d'âme (20), par exemple une résine expansée.

L'entretoise (5) comporte une jupe annulaire (21) dont la dimension extérieure est sensiblement égale à la dimension intérieure de la coque (7) dont l'extrémité inférieure ouverte est emboîtée et fixée, par exemple collée, sur la jupe annulaire (21). A sa partie inférieure, l'entretoise (5) comporte une partie (22) en forme de tulipe assurant un raccordement avec le poteau électrique (6).

Dans le cas de la figure 1, le poteau électrique (6) est un poteau creux et la partie inférieure de l'entretoise (5) comporte de préférence une double paroi enserrant le poteau électrique (6) à l'intérieur et à l'extérieur.

La figure (2) illustre un autre mode de réalisation de l'invention dans lequel la structure centrale (7) est cylindrique et fermée à sa partie supérieure par un bouchon (23). Les supports de câble individuels (2, 3, 4), représentés schématiquement, sont cette fois répartis uniquement sur les côtés du corps central (1). Les supports 2, 3, 4 sont fixés selon l'un au choix des modes de fixation représentés à la figure 1.

De même que dans le ras précédent, la coque (7) est recouverte d'une résine de bourrage (17), elle-même recouverte d'une peau de résine au silicône (19). Dans ce mode de réalisation, le poteau (6) est un poteau en bois et la partie inférieure de l'entretoise (5) comporte une seule paroi s'emboîtant sur la surface extérieure du poteau (6).

On peut apporter aux modes de réalisation décrits ci-dessus les variantes d'exécution suivantes.

L'entretoise (5) peut être disposée à la manière d'un manchon extérieur au corps central et au poteau.

Afin d'éviter toute pénétration d'humidité dans le poteau, on peut également prévoir un manchon en matière plastique thermo-retractable disposé sur la partie de liaison entre le corps central (1) et le poteau (6).

Bien que les modes de réalisation décrits en détail comportent à chaque fois une entretoise (5), on peut prévoir d'emmancher directement le corps central (1) sur le poteau (6). De même, le corps central (1) peut avoir une section transversale non circulaire, par exemple une section transversale adaptée à la section transversale du poteau sur lequel la structure centrale doit être montée.

## Revendications

1. Support de câbles pour poteau électrique, comportant un corps (1) en matériau isolant comprenant une âme (7, 20) sur laquelle sont montés des supports de câble individuels (2, 3, 4), le support de câbles comprenant en outre des moyens pour rapporter ledit support à une extrémité d'un poteau (6), tandis que les moyens de fixation (8, 10, 11, 15, 16, 28) entre les supports de câble individuels (2, 3, 4) et l'âme (7, 20) sont noyés dans une matière de bourrage (17), caractérisé en ce que l'âme est délimitée extérieurement par une coque sensiblement rigide (7) à laquelle sont fixés les supports de câble individuels (2, 3, 4), et en ce que l'âme est revêtue par une peau isolante (19) avec interposition de la matière de bourrage (17).

2. Support selon la revendication 1, caractérisé en ce que la matière de bourrage (17) a, en contact avec la peau (19), une surface ondulée définissant des ondulations correspondantes à la surface extérieure de la peau (19).

3. Support selon l'une des revendications 1 ou 2, caractérisé en ce que la coque (7) comprend un matériau filamentaire enroulé selon une direction tangentielle et noyé dans une résine, la coque comprenant en outre, de préférence, des fibres longitudinales noyées dans ladite résine.

4. Support selon l'une des revendications 1 à 3, caractérisé en ce que la coque (7) est tronconique.

5. Support selon l'une des revendications 1 à 4, caractérisé en ce que la coque (7) renferme, sur une partie au moins de sa hauteur, un matériau de remplissage.

6. Support de câbles selon l'une des revendications 1 à 5, caractérisé en ce que l'un au moins des supports de câble individuels (2, 3) comprend une plaque de base (8, 10) collée contre la coque (7).

7. Support de câbles selon la revendication 6, caractérisé en ce que des fibres (11) sont enroulées autour de la plaque de base (10) et de la coque (7).

8. Support de câbles selon l'une des revendications 1 à 5, caractérisé en ce que l'un au moins des supports de câble individuels (4) comprend une tige (12) s'étendant radialement à travers la coque (7), dans un tube support isolant (14) interposé entre un épaulement (28) du support de câble individuel (4) et un écrou ou analogue (16) s'appuyant sur une collerette (15) du tube, elle-même appuyée contre la surface extérieure de la coque (7) à l'opposé de l'épaulement (28), qui est adjacent à une tête (13) de support de câble individuel.

9. Support de câbles selon l'une des revendications 1 à 8, caractérisé en ce que les moyens pour rapporter le corps (1) à une extrémité d'un poteau (6) comprennent une entretoise annulaire (5) emmanchée avec la coque (7).

10. Support de câbles selon l'une des revendications 1 à 9, caractérisé en ce que les moyens pour supporter le corps central (1) permettent d'orienter le support de câbles sur l'extrémité du poteau, autour de l'axe du poteau.

## Claims

1. A cable support for an electric utility pole, comprising a body (1) of insulating material having a core (7, 20) on which are mounted individual cable support brackets (2, 3, 4), the cable support being also provided with means for attaching said support to one end of a pole (6) whilst fixing means (8, 10, 11, 15, 16, 28) for securing the individual cable support brackets (2, 3, 4) to the core (7, 20) are embedded in packing material (17), characterized in that the core is delimited externally by a substantially rigid shell (7) to which are attached the individual cable support brackets (2, 3, 4) and in that the core is covered with an insulating membrane (19) with interposition of said packing material (17).

2. A cable support according to claim 1, characterized in that the surface of the packing material (17) which is in contact with the membrane (19) is provided with wavy corrugations defining corresponding corrugations of the outer surface of said membrane (19).

3. A cable support according to claim 1, characterized in that the shell (7) comprises filament material wound in a tangential direction and embedded in a resin, the shell preferably also comprising longitudinal fibers embedded in said resin.

4. A cable support according to claim 1, characterized in that the shell (7) is of frusto-conical shape.

5. A cable support according to claim 1, characterized in that the shell (7) contains packing material up to at least part of its height.

6. A cable support according to claim 1, characterized in that at least one of the individual cable support brackets (2, 3) comprises a base plate (8, 10) applied against the shell (7) by adhesive bonding.

7. A cable support according to claim 6, characterized in that fiber-type filaments (11) are wound around the base plate (10) and the shell (7).

8. A cable support according to claim 1, characterized in that at least one of the individual cable support brackets (4) comprises a rod (12) extending radially through the shell (7) within an insulating support tube (14) interposed between a shouldered portion (28) of the individual cable support bracket (4) and a nut or the like (16) applied against an annular flange (15) of said tube, said flange being in turn applied against the external surface of the shell (7) on the side remote from the shouldered portion (28) which is adjacent to a head (13) of the individual cable support bracket.

9. A cable support according to claim 1, characterized in that the means for attaching the body (1) to one end of a pole (6) comprise an annular spacer member (5), said annular spacer member and the shell (7) being in sleeve relationship with one another.

10. A cable support according to claim 1, characterized in that the means for attachning the central body (1) make it possible to orient the cable support on the end of the pole around the axis of said pole.

## Patentansprüche

1. Kabelstütze für Elektrizitätsmasten, mit einem Körper (1) aus Isoliermaterial, der eine Seele (7, 20) aufweist, woran einzelne Kabelhalter (2, 3, 4) angebracht sind, wobei die Kabelstütze ferner Mittel zur Anbringung dieser Stütze an einem Ende eines Mastes (6) aufweist, wobei die Befestigungsmittel (8, 10, 11, 15, 16, 28) zwischen den einzelnen Kabelhaltern (2, 3, 4) und der Seele (7, 20) in einen Füllstoff (17) eingebettet sind, dadurch gekennzeichnet, daß die Seele außenseitig durch eine im wesentlichen starre Schale (7) begrenzt ist, woran die einzelnen Kabelhalter (2, 3, 4) befestigt sind, und daß die Seele mit einer Isolierhaut (19) bedeckt ist, unter Zwischenfügung des Füllstoffes (17).

2. Stütze nach Anspruch 1, dadurch gekennzeichnet, daß der Füllstoff (17) eine mit der Haut (19) in Berührung befindliche gewellte Oberfläche aufweist, die entsprechende Wellungen an der Außenoberfläche der Haut (19) verursacht.

3. Stütze nach Anspruch 1 oder 2, dadurch gekennzeichnet, daß die Schale (7) ein faseriges Material aufweist, das in Tangentialrichtung aufgerollt und in ein Harz eingebettet ist, wobei die Schale ferner vorzugsweise längsverlaufende Fasern aufweist, die in das genannte Harz eingebettet sind.

4. Stütze nach einem der Ansprüche 1 bis 3, dadurch gekennzeichnet, daß die Schale (7) kegelstumpfförmig ist.

5. Stütze nach einem der Ansprüche 1 bis 4, dadurch gekennzeichnet, daß die Schale (7) auf wenigstens einem Teil ihrer Höhe einen Füllstoff aufweist.

6. Kabelstütze nach einem der Ansprüche 1 bis 5, dadurch gekennzeichnet, daß wenigstens einer der einzelnen Kabelhalter (2, 3) eine Grundplatte (8, 10) aufweist, welche gegen die Schale (7) geklebt ist.

7. Kabelstütze nach Anspruch 6, dadurch gekennzeichnet, daß Fasern um die Grundplatte (10) und die Schale (7) herum gewickelt sind.

8. Kabelstütze nach einem der Ansprüche 1 bis 5, dadurch gekennzeichnet, daß wenigstens einer der einzelnen Kabelhalter (4) eine Stange (12) aufweist, die sich in Radialrichtung durch die Schale (7) erstreckt, in einem isolierenden Tragrohr (14), das zwischen einer Schulter (28) des einzelnen Kabelhalters (4) und einer Schraubmutter (16) oder dergleichen eingefügt ist, welche sich auf einem Kragen (15) des Rohres abstützt, der seinerseits gegen die Außenoberfläche der Schale (7) auf der von der Schulter (28) abgewandten Seite abgestützt ist, wobei die Schulter (28) an einen Kopf (13) des einzelnen Kabelhalters angrenzt.

9. Kabelstütze nach einem der Ansprüche 1 bis 8, dadurch gekennzeichnet, daß die Mittel zum Anbringen des Körpers (1) an einem Ende eines Mastes (6) einen ringförmigen Steg (5) aufweisen, der mit der Schale (7) zusammengesteckt ist.

10. Kabelstütze nach einem der Ansprüche 1 bis 9, dadurch gekennzeichnet, daß die Mittel zum Haltern des zentralen Körpers (1) die Orientierung der Kabelstütze am Ende des Mastes um seine Achse gestatten.

<u>FIG.1</u>

FIG. 2